# EUROPEAN PATENT SPECIFICATION

(11) **EP 0 240 312 B1**
(45) Date of publication and mention of the grant of the patent: **24.03.1993**
(21) Application number: 87302791.6
(22) Date of filing: 31.03.1987
(51) Int. Cl.: H02M 3/335

(54) **Stabilized electric power apparatus for generating direct and alternating current simultaneously in one transformer**
Stabilisiertes Netzteil, das gleichzeitig Wechselstrom und Gleichstrom in einem Transformator erzeugt
Appareil d'alimentation stabilisée de puissance fournissant simultanément du courant continu et du courant alternatif dans un transformateur

(30) Priority: 31.03.1986 JP 73423/86
(43) Date of publication of application: 07.10.1987
(73) Proprietor: KABUSHIKI KAISHA TOSHIBA, Kawasaki-shi, Kanagawa-ken 210 (JP)
(72) Inventor: Okochi, Sadao c/o Patent Division, Minato-ku Tokyo (JP)
(74) Representative: Freed, Arthur Woolf

(56) References cited:
- EP-A- 0 048 934
- EP-A- 0 189 680
- DE-A- 2 919 905
- DE-A- 3 140 175
- DE-A- 3 243 316

## Description

The present invention relates to a stabilized electric apparatus which can supply direct and alternating current simultaneously to the load in one transformer and can be used for facsimile optical character readers (referred as OCR hereinafter).

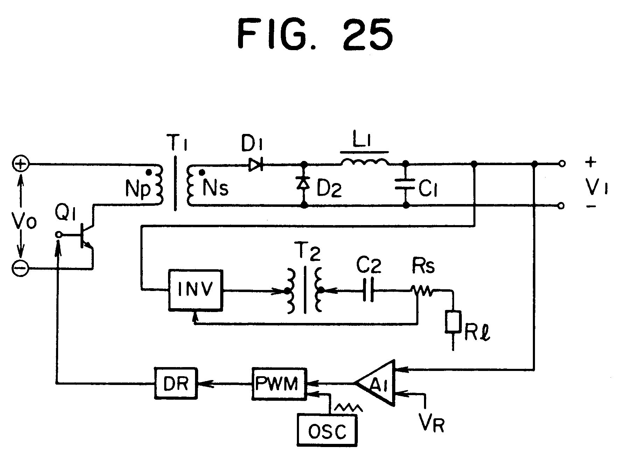

So far, the apparatus shown in Fig. 25 has been known as a multi-output stabilized power supply apparatus used for facsimile, OCR and so on.

In Fig. 25, character V₀ denotes a direct current power supply, Q₁ denotes the transistor for switching, T₁ denotes the inverter transformer, Nₚ denotes the primary coil, D₁ and D₂ denote diodes for rectification, C₁ denotes the capacitor for smoothing, L₁ denotes the choke coil.

INV denotes the inverter which outputs the alternating current by switching the voltage V₁, T₂ denotes the transformer for transforming the alternating current outputted from INV, C₂ denotes the condenser for filter, Rℓ denotes the alternating load.

Further, A₁ denotes the error amplifier circuit for comparing the direct output V₁ with a reference input voltage V_{R} and outputs the signal corresponding to the difference, PWM denotes the pulse width modulation circuit which outputs a pulse modulation width, corresponding to the cross-point of signals outputted from the error amplification circuit A₁ and triangular waves outputted from the oscillation circuit OSC, and DR denotes the drive circuit which amplifies the pulse and loads it into the base of the transistor Q₁.

In this stabilized electric power apparatus, while stabilized direct output V₁ is generated, the alternating output is generated from the stabilized direct current output by the inverter INV and transformer T₂.

The amount of the current flowing in the alternating load Rℓ is detected by resistance Rₛ and the signal in accordance with the amount is fed back in the inverter INV. The inverter INV changes the switching timing of voltage V₁ and operates to make the current to be constant.

By the way, in the stabilized power supply apparatus as shown in Fig. 25, a constant voltage and a constant current can be fed to a direct current load and an alternating current load, respectively. However, the stabilized electric power apparatus should have two sets of switching circuits such as a switching transistor Q₁ and an inverter INV, and in addition, two sets of transformers T₁ and T₂, therefore, the arrangement of the circuit is complicated, on requiring a large number of component parts. As a result, there has been raised a problem of a high manufacturing cost of the stabilized electric power apparatus.

On the contrary, as shown in U.S. Patent Application No. 814,494, filed on December 30, 1985, US Patent No. 4 677 534, there has been developed a power source circuit having one transformer and one switching transistor, for producing direct current output and alternating current output.

On the other hand, in the facsimile and the OCR, the alternating load Rℓ is a fluorescent lamp and used as the luminous source of an image sensor. Since the luminous source of an image sensor is required to have less flicker, so it is necessary to be lighted in a higher frequency.

At this time, alternating current to be outputted shall meet the following requirements;
(a) The inverter INV must be able to start a fluorescent lamp.
   A fluorescent lamp does not start electrical discharging unless a higher voltage is added than for lighting. Therefore, the alternating output must be able to generate this discharge starting voltage.
(b) The inverter INV must be able to control the current of the fluorescent lamp.
   Since the fluorescent lamp has a negative resistance characteristic, when the current increases, the load voltage decreases and further it causes the increase of current. So, to stabilize the current, it is necessary to connect the impedance with it in series. Therefore, it is required that in alternating output line, impedance for stabilizing shall be provided.
(c) The inverter must not reduce the life of fluorescent lamp lighting.

In general, since the lighting life of fluorescent lamp is reduced due to the excessively large or small current supplied, alternating output current flows in the fluorescent lamp shall be kept in required ranges.

EP-A-189680 (Articles 56 and 54(3) EPC) discloses a stabilized electric power apparatus in which the oscillator OSC does not oscillate at a constant frequency and the frequency of the oscillator OSC changes in accordance with an alternating current (AC) output voltage of the resistor Rₛ.

Whereas the first comparator A₁ compares the direct current (DC) output voltage V₁ with the reference voltage V_{R1}, the second comparator A₂ compares a voltage applied to the resistor R_{S} with the reference voltage V_{R2}. The oscillating frequency of the oscillator OSC changes in accordance with the output of the second comparator A₂. The pulse width modulator PM supplies a signal, whose pulse width and frequency are changed in accordance with the outputs of the second comparator A₂ and the oscillator OSC, to the transistor Q₁ through the drive circuit DR.

Namely, in the stabilized power supply apparatus shown in this reference a signal, whose pulse width and frequency are changed, is applied to the switching transistor Q₁ so that the DC voltage V₁ is kept constant and a current, which flows through the AC load RL, is controlled to be constant.

Since the oscillating frequency of the oscillator OSC changes in accordance with the voltage to be applied to the resistor R_{S}, the structure of the circuit becomes complicated.

Furthermore, although the aforementioned reference discloses a stabilized power supply apparatus of the forward type, it does not disclose that impedance means is connected to a coil for generating an AC in a stabilized power supply apparatus of flyback, push-pull, or half-bridge type.

An object of the present invention is to provide an improved power apparatus for taking out alternating current power and direct current power from voltage created in secondary windings of a transformer, which allows an alternating current load having a negative resistance characteristic to be connected to a direct current power source.

According to one aspect of the present invention, there is provided a stabilized power supply apparatus comprising: a switching circuit for converting a direct current power into pulses by switching, a transformer having a primary winding to be applied with the pulses generated by the switching circuit, at least one first secondary winding and a second secondary winding, a rectifying/smoothing circuit connected to the first secondary winding, an alternating current load connected to the second secondary winding, an oscillator, a comparison circuit for comparing the output of the rectifying/smoothing circuit with a reference value, a pulse width modulator for modulating the pulse width of the output of the oscillator in accordance with the output of the comparison circuit, and a drive circuit for controlling the switching circuit in accordance with the output of the pulse width modulator, characterized in that the alternating current load is connected to the second secondary winding via impedance means, the AC load having negative resistance property, and in that the oscillator oscillates at a constant frequency.

According to another aspect of the present invention, there is provided a stabilized power supply apparatus comprising: a switching circuit for converting a direct current power into pulses by switching, a transformer having a primary winding to be applied with the pulses generated by the switching circuit, at least one first secondary winding a second secondary winding and a third secondary winding, a rectifying/smoothing circuit connected to the first secondary winding, an alternating current load connected to the second secondary winding, a second rectifying/smoothing circuit connected to the third secondary winding, an oscillator, a comparison circuit for comparing a direct voltage derived from an AC voltage across the third secondary winding of the transformer with a reference value, a pulse width modulator for modulating the pulse width of the output of the oscillator in accordance with the output of the comparison circuit, and a drive circuit for controlling the switching circuit in accordance with the output of the pulse width modulator, characterized in that the alternating current load is connected to the second secondary winding via impedance means, the AC load having negative resistance property, in that the oscillator oscillates at a constant frequency and in that the comparison circuit compares the output voltage of the second rectifying/smoothing circuit with the reference value.

By use of a stabilized power supply apparatus of the present invention, stabilized alternating current power can be fed to an alternating current load having a negative resistance characteristic.

Embodiments of the invention will now be described, by way of example, with reference to the accompanying drawings, in which:
Fig. 1 is a circuit diagram showing the embodiment of the stabilized power supply apparatus of the present invention,
Fig. 2 is a view showing the description of switching,
Fig. 3 is a view showing the relation between input voltage and the basic voltage amplitude,
Fig 4 is a graph of impedance against frequency,
Figs. 5 through 8 are circuit diagrams showing the other embodiments of the present invention,
Fig. 9 is a view showing the diode functions of Fig. 8,
Figs. 10 through 12 are circuit diagrams showing the further embodiments of the present invention,
Figs. 13 through 16 are circuit diagrams showing the transformed embodiment of the primary side circuit of Fig. 8,
Figs. 17 and 18 are circuit diagrams showing the further other embodiment of the present invention,
Figs. 19 and 20 are circuit diagrams showing the transformed embodiment of impedance of each embodiment,
Figs. 21 through 24 are circuit diagrams showing the transformed embodiment of fluorescent lamp lighting circuit of each embodiment,
Fig. 25 is a circuit diagram showing an example of conventional stabilized electric power apparatus.

The present invention will be explained in detail with the accompanying drawings.

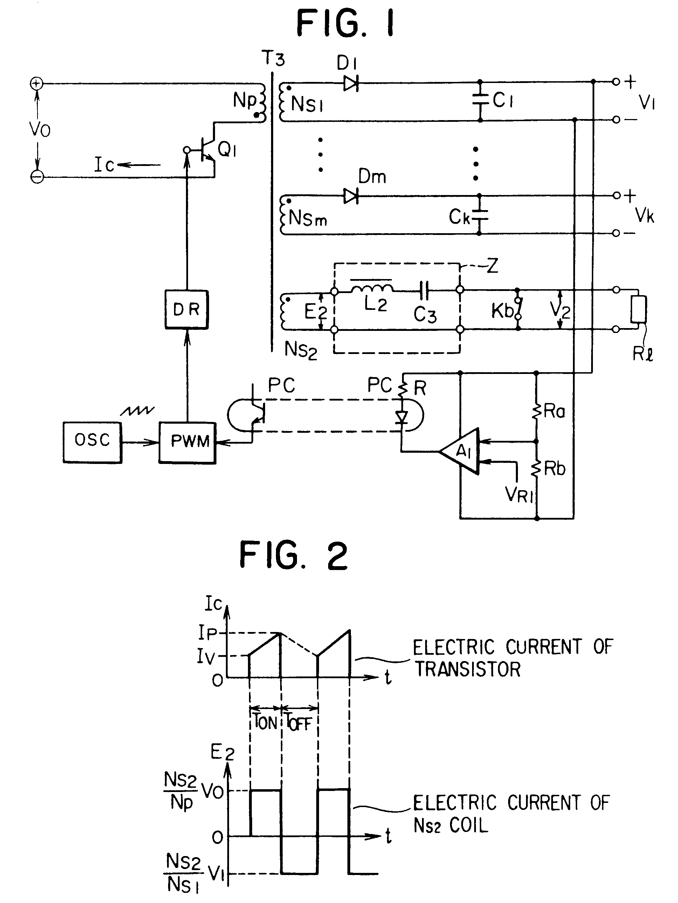

Fig. 1 is a circuit diagram showing an embodiment of the stabilized power supply apparatus of the present invention. The reference numerals in Fig. 1 are similar to those in Fig. 25.

The present embodiment is applied to a fly-back converter.

In Fig. 1, V₀ denotes a direct current power supply Q₁ denotes a transistor for switching, T₃ denotes a transformer for fly-back converter, Nₚ denotes a primary coil, N_{S1} and Nₛₘ denote the secondary coils for direct current output magnetically coupled with the primary coil, N_{S2} denotes the secondary coil for alternating current output magnetically combined with the primary coil Nₚ.

And D₁ and Dₘ denote diodes for rectifying the second coils N_{S1} and Nₛₘ, C₁ denotes a capacitor for smoothing, L₂ denotes a choke coil provided with the secondary coil N_{S2} connected in series, C₃ denotes a capacitor connected in series with choke coil L₁ for filters, K_{b} denotes a relay contact provided with alternating current output lines connected in parallel, Rℓ denotes an alternating current load.

Further, A₁ denotes an error amplifying circuit which compares the direct current outputted by the secondary coil N_{S1} with the reference voltage V_{R1} and outputs signals, depending on the difference (the electric power is supplied from the direct current output V₁), PC denotes a photo coupler, R denotes a resistance for electric current control, OSC denotes an oscillation circuit generating triangular waves, PWM denotes a pulse width modulating circuit which compares signals outputted by the error amplification circuit A₁ with triangular waves outputted by the oscillation circuit OSC and outputs a pulse so that the pulse width can be changed, depending on the movement or the cross-point of both signals, and DR denotes a drive circuit which amplifies the pulse and adds the base of the switching transistor Q₁.

By the output of the drive circuit DR, a duty factor of the transistor Q₁ is controlled and the direct current output V₁ is stabilized.

The operation of the alternating output circuit connected with the secondary coil Nₛ₂ will be described.

The energy is accumulated in the transformer T₃ during the period Tₒₙ in which transistor Q₁ is ON. And the energy accumulated in the transformer T₃ is supplied to the direct and alternating current load through Nₛ₂ and Nₛₘ.

It is necessary to always feed energy to an alternating current load R , during a transistor Q₁ is ON, energy fed to the alternating current load R is fed from the primary side of a transformer T₃ since a current Ip runs through a primary coil Np. Fig. 2 shows the relationship between the ON/OFF of the collector current Ic of a transistor Q₁ and a voltage E₂ created in a secondary coil NS₂. As mentioned above, during a transistor Q₁ is ON, a voltage E₀ is induced by a primary side input voltage V₀ while during a transistor Q₁ is OFF, it is induced by direct current output voltages V₁ and Vₖ. It is noted that an example having the direct current output voltage V₁ alone is shown in Fig. 2. In the case of a plurality of direct current output voltages, the value of the voltage E₀ during turn-off of the transistor Q₁ is the sum of voltages induced by the magnetic coupling between secondary coils NS₁, ..., NSₙ₁ creating direct current output powers and a secondary coil Nsp.

Explanation will be made hereinbelow the forward type converter show in Fig. 1, as a forward type converter in which the transformer T₃ has m secondary coils NS₁ ... NSₘ and a secondary coil NS₂, and creates one alternating current output V₂ and one direct current output V₁.

In the forward type converter as shown in Fig. 1, a feedback circuit for stabilizing the direct current output V₁ is provided.

However, since the amplitude of the basic wave of the alternating current output E₂ is substantially constant even if the input voltage varies, there is required no circuit for regulating the amplitude of the load current from which a basic wave component is extracted. The reason will be explained hereinbelow.

The change of one periodic flux is 0 in the transformer. So, the following equation,

${\text{(N}}_{\text{s1}} {\text{/ N}}_{\text{p}} {\text{) · V}}_{\text{o}} {\text{· T}}_{\text{on}} {\text{= V₁ · T}}_{\text{off}}$

can be obtained. And in the V₀ = V₀ (V₀ is the definite input voltage), when "Tₒₙ" is selected so that "Tₒₙ" can be equal to "T_{off}, the equation can be defined as,

${\text{T}}_{\text{on}} \text{= (} {{\text{V}}_{\text{o}}}_{̲} {\text{/ V}}_{\text{o}} \text{+} {{\text{V}}_{\text{o}}}_{̲} \text{) T.}$

At this time, when the E₂ waveform expanded into the Fourier series,

$\text{E₂ = A₁' Sinωt}$
$\text{+ A₂' Sin2ωt}$
$\text{+ A₃' Sin3ωt + ....}$
$\text{+ A₁'' Cosωt}$
$\text{+ A₂'' Cos2ωt}$
$\text{+ A₃'' Cos3ωt + ....}$

is obtained.

Assuming that the amplitude of the k-th harmonic is Ak, the equation,

$\text{Ak = √} \overline{\text{[(Ak')²}} \overline{\text{+}} \overline{\text{(Ak'')²]}}$

is obtained.

Assuming that the duty factor or the transistor Q₁ is λ ,

$\text{λ =} {{\text{V}}_{\text{o}}}_{̲} {\text{/(V}}_{\text{o}} \text{+} {{\text{V}}_{\text{o}}}_{̲} \text{)}$

Therefore, the equation of ${\text{Ak = (1/kπ ) (N}}_{\text{s2}} {\text{/N}}_{\text{p}} {\text{)V}}_{\text{o}} \text{x}$ 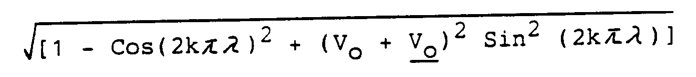
is obtained.

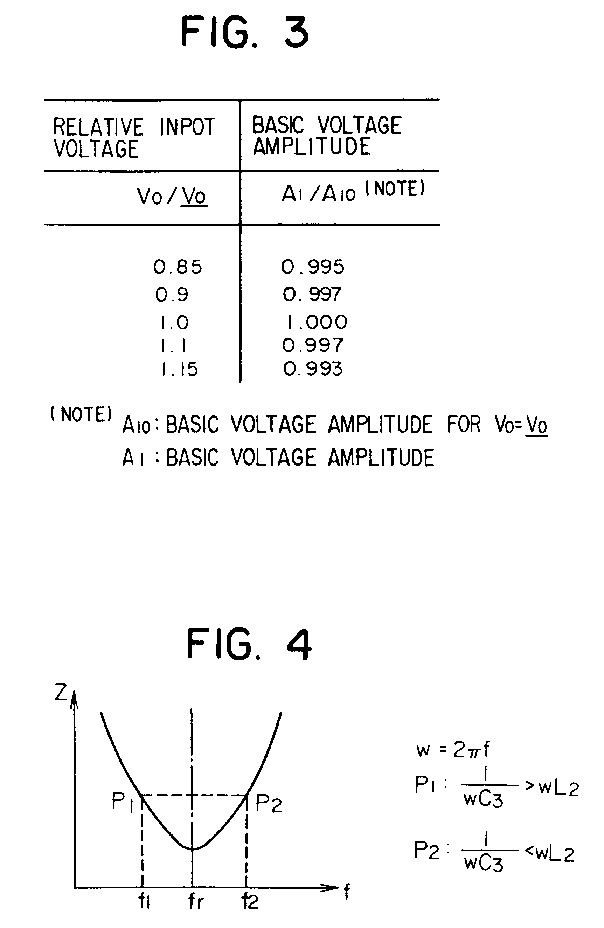

To find the fundamental amplitude of the equation of $\text{V₀ = 0.85} {{\text{V}}_{\text{o}}}_{̲} \text{∼ 1.15} {{\text{V}}_{\text{o}}}_{̲}$ , the formula shown in Fig. 3 is obtained. From this formula, the fundamental wave amplitude can be taken as being constant to the equation of ${\text{V}}_{\text{o}} \text{= 0.85} {{\text{V}}_{\text{o}}}_{̲} \text{∼ 1.15} {{\text{V}}_{\text{o}}}_{̲}$ , without consideration of variations of several percentage. Therefore, since fundamental wave component of alternating output voltage E₂ is obtained as voltage load V₂ by the following impedance circuit Z, an circuit for stabilizing the voltage load amplitude is not especially necessary.

An impedance circuit Z connected to the secondary coil NS₂ has two roles of serving as a filter for extracting a fundamental wave component alone from the alternating current output E₂ and of stabilizing electrical current when the alternating current load Rℓ is connected to the secondary coil NS₂. At first the role of serving as a filter owned by the impedance circuit Z will be explained.

Fig. 4 shows the relation between an input impedance Z of the impedance circuit Z and frequency f when viewing an alternating current load Rℓ from the secondary coil Nₛ₂ side. In this case, the input impedance Z is expressed by the equation,

${\text{Z = jω L₂ + 1/(jω C₃) + R}}_{\text{L}} \text{,}$

and resonance frequency fr can also be found from the equation,

$\text{fr = 1/2π · 1 √} \overline{\text{L₂ C₃}} \text{·}$

When the frequency of the basic wave is defined as fr, the impedance become larger on the voltage E2 of fr frequency and the current is reduced. Namely, in the current supplied to the impedance Z, the higher harmonic current is reduced and the voltage V₂ of the fundamental wave component is obtained from the alternating voltage E₂. By this, only the basic wave component substantially flows in the choke coil L₂ and the capacitor C₃.

On the other hand, the high harmonic wave current supplied in the distribution line of the alternating current load Rℓ brings about noise and exerts a bad influence on the power source, logic and other electronic circuit which are susceptible to interference electromagnetic fields.

Then the role of stabilizing electrical current owned by the impedance circuit Z will be explained. In case that the alternating current load Rℓ is an electric discharge lamp such as a fluorescent lamp, the alternating current load has a negative resistance characteristic which offers such a phenomenon that voltage created in the load is decreased as current running through the load is increased while voltage created in the load is increased as current running through the load is decreased. When the load current is increased from such a condition that the alternating current V₂ is stabilized, the load voltage V₂ is lowered. Then a difference is obtained between the alternating current output E₂ and the load voltage V₂ and therefore, the load current is further increased. The increase in the load current further lowers the load voltage V₂ so that it is impossible to restrain the load current from increasing, resulting in damage of the circuit. On the contrary when the load current is decreased, the decrease of the load current is further promoted due to the negative resistance characteristic of the load. The impedance circuit Z absorbs the difference between the load voltage V₂ and the alternating current output E₂, which is effected when the load current varies, and therefore, suppresses variations in the load current to a small value. Accordingly, the impedance circuit Z has to have an impedance to some degree.

Accordingly, as shown in Fig. 4 the switching frequency (basic wave frequency) of the switching transistor Q₁ is set to a frequency f₁ or f₂ which is slightly shifted from the resonance frequency fr of the impedance circuit Z. Since the frequency of the basic wave is shifted from the resonance frequency fr, it is expected that the fundamental wave component of the alternating output voltage E₂ is delayed or superfluous frequency components are taken out. However, the impedance circuit Z attenuates a high frequency wave having a frequency which is n times as large as the frequency of the fundamental wave component where n is an interger, and therefore, there is raised no problem if a shift from the resonance frequency can be restrained below the frequency fr.

Namely, the choke coil L₂ and the condenser C₃ can be used as stabilizers for the fluorescent lamp current.

Secondly, it is explained the starting process of the fluorescent lamp Rℓ. In this embodiment, the relay contact K_{b} connected with the Rℓ in parallel can start the fluorescent lamp

Initially, the relay contact K_{b} is closed, when the K_{b} is opened at the starting, the voltage E₂ is entirely loaded with the R_{L} because the discharged current is not flowing yet.

The number of turns of coil Nₛ₂ is defined so that E₂ becomes higher than the discharge starting voltage of the fluorescent lamp. Consequently, when the joint K_{b} is opened, the fluorescent lamp starts discharging.

After the fluorescent lamp Rℓ initiating electrical discharge, electrical current flows through the impedance circuit Z, and therefore, excessive voltage is consumed in the impedance circuit Z during electrical discharge of the fluorescent lamp Rℓ.

It is necessary to set up the impedance of the impedance circuit Z that the current supplied to R can be of the required value, if it has dispersion, it can amend the dispersion of impedance Z by providing the variable resistance with the OSC and adjusting the oscillation frequency f. In the apparatus of this embodiment controlling the duty factor of the transistor Q₁ stabilizes the direct current output.

Thus, the constant current can be flowed in setting the switching frequency of the transistor Q₁ by connecting the secondary coil Nₛ₂ with the impedance circuit Z composed of choke coil L₂ and the capacitor C₂, without influences of input voltage and changes in the load.

Subsequently, another embodiment of the present invention will be explained by using variable power supply circuit with alternating circuit to transformer T₃ and by connecting the alternating output circuit with impedance Z.

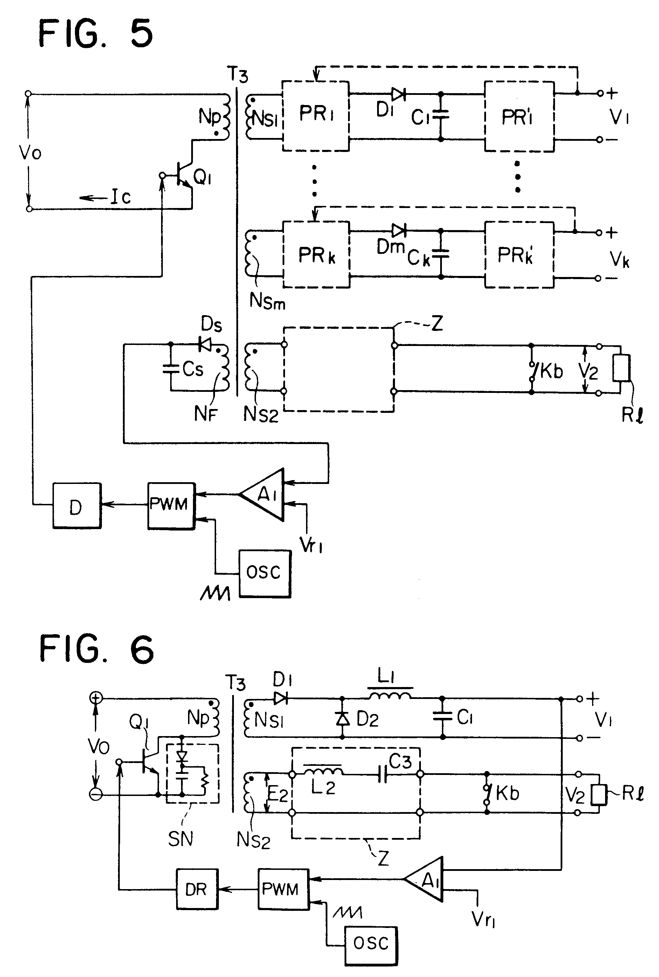

In Fig. 5, control voltage for stabilizing the output voltage is obtained from the coil N_{F} provided with transformer T₃ in case the apparatus is applied to the fly-back converter.

In Fig. 5, Dₛ is a rectifier, Cₛ is a condenser and others are similar to Fig. 1.

This embodiment shows that a photo-coupler for insulating the primary and the secondary coils are unnecessary.

PR₁∼PRₖ shows the positions where a magnetic amplifier or a phase control circuit should optionally be provided (feed-back signals are obtained from the output Vₖ). PR₁'∼PRₖ' also shows the positions where a series-pass regulator and so on should optionally be provided.

Another embodiment will be explained on the basis of Fig. 6.

This embodiment shows the present invention when it is applied to a forward converter.

In Fig. 6, character Vₒ denotes the direct current power supply, Q₁ denotes the switching transistor, T₃ denotes the inverter transformer, Nₚ denotes the primary coil, Nₛ₁ denotes the secondary coil for direct current output magnetically combined with the first coil Nₚ, Nₛ₂ denotes the secondary coil for alternating current output magnetically combined with the first coil Nₚ, D₁ and D₂ denote the diodes for rectification of the secondary coil Nₛ₁, L₁ denotes the choke coil connected with the secondary coil Nₛ₁, C₁ denotes the capacitor for smoothing, L₂ denotes the choke coil of the secondary coil Nₛ₂, C₃ denotes the capacitor for filter, K_{b} denotes the relay joint, Rℓ denotes the alternating current load (fluorescent lamp).

Further, A₁ denotes the error amplification circuit which compares direct current outputted by the secondary coil Nₛ₁ with the standard voltage VR₁ and outputs signals depending on the difference, OSC denotes the oscillation circuit which generates triangular waves, PWM denotes the pulse width modulation circuit to output a pulse whose width changes, corresponding to the movement of the cross-point, DR denotes the drive circuit which amplifies the pulse and adds it to the base of the Transistor Q₁,

In this embodiment, the direct output voltage is stabilized by controlling the duty factor of the transistor Q₁.

Firstly, how to load the alternating current with the fluorescent lamp will be described.

When the transistor Q₁ is ON, there is a positive half-wave of the voltage E₂ of the coil Nₛ₂ for the fluorescent lamp through the choke coil L₂ and the capacitor C₃. When the transistor Q₁ is OFF, a negative half-wave of E₂ voltage is generated from the back-electromotive force of the transformer T₃.

The negative half-wave cannot obtain the energy from the input when the transistor Q₁ is OFF. The voltage of the negative half-wave is made by the exciting energy of the transformer T₃, and the magnetic and electrostatic energy are accumulated by the choke coil L₂ and capacitor C₃ at the end or the positive period.

For this purpose, an air gap is provided in the magnetic flux path and the exciting energy is enlarged so that the electric power of the coil Nₛ₂ necessary for the period of the half-wave can be maintained.

All exciting energy at the end of the positive period and the energy accumulated by the choke coil L₂ and the capacitor C₃ are not necessarily absorbed by the fluorescent lamp.

The excess energy is accumulated by the choke coil and the capacitor C₃ at the end of the negative period again, part of which is consumed by a snubber circuit SN provided with the primary coil during the negative period (by a snubber circuit, which is composed of capacitor, resistance and coil provided for reducing stress with the transistor).

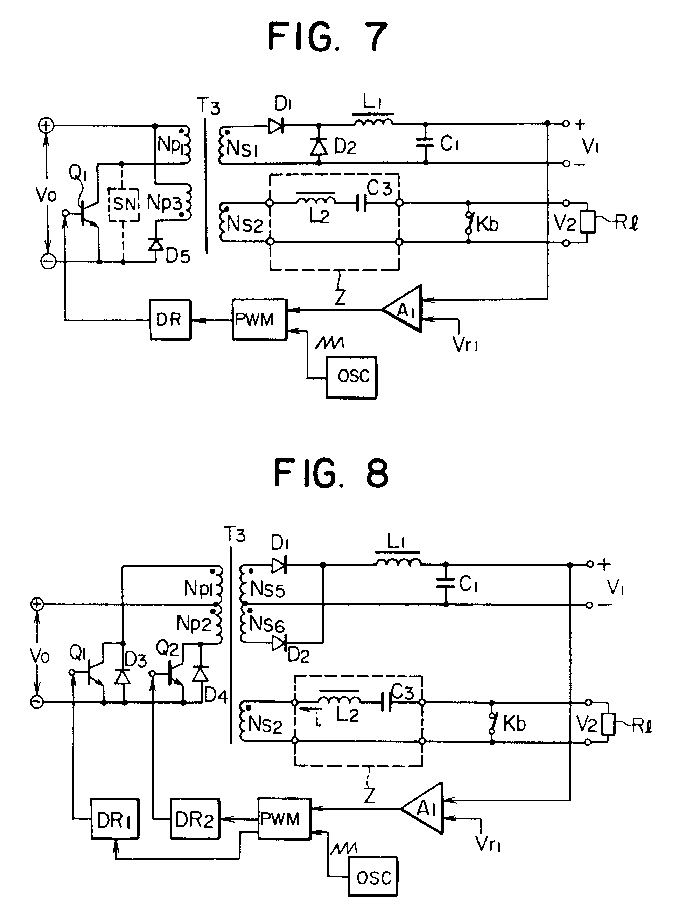

To reduce losses in the snubber circuit SN, as shown in Fig. 7, the reset coil Nₚ₃ may be combined with the first coil Nₚ₁ and provided so that energy can be returned to the input line through the reset coil Nₚ₃.

When the switching circuit on the primary coil Nₚ₁ side of the transformer T₃ is a 2-transistor type such as a push-pull type or a half-bridge type, the energy of positive and negative half waves can be supplied from the input by alternately turning two transistors ON.

Therefore, it is not necessary to rely on the exciting energy in the power source circuit with 2 switching transistors, so the air gap in the magnetic path is unnecessary.

In Fig. 8, the diodes D₃ and D₄ are used for returning the energy of the alternating current to input side.

The phase angle of electric current i of the secondary coil Nₛ₂ is shifted to right or left by the value of the choke coil L₂ and condenser C₃, on the basis ON-time of transistor Q₁.

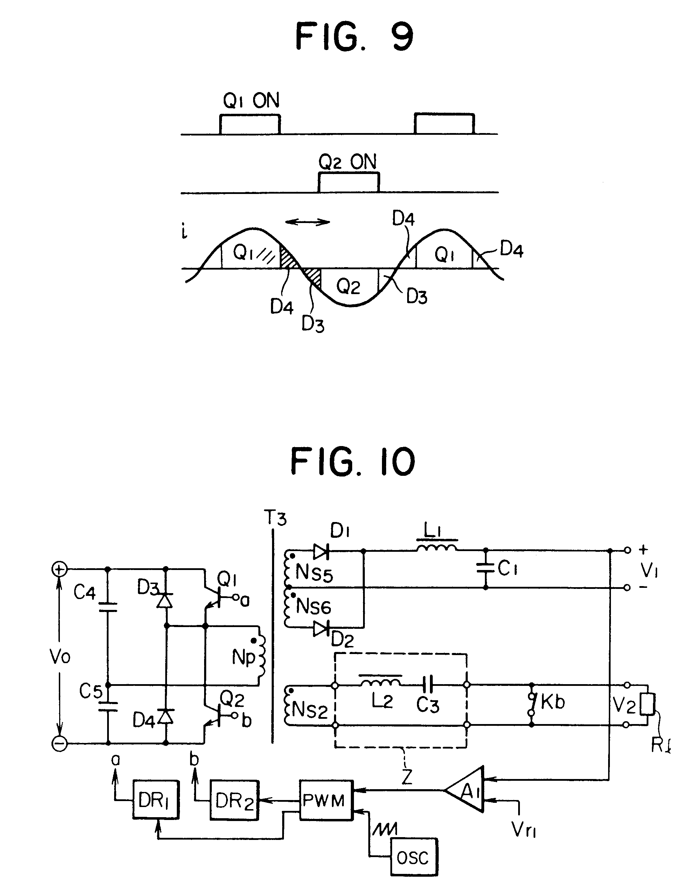

Fig. 9 is showing the above-mentioned electric current i.

As shown in Fig. 9, when the transistors Q₁ and Q₂ are OFF respectively, the energy of the choke coil L₂ and the capacitor C₃ returns to the electric power source through the diode D₃ or D₄.

The returning amount and a diode being ON vary depending on the value of the choke coil L₂, capacitor C₃ and resistor R and ON-time width (controlled by PWM) of transistors Q₁ and Q₂.

The operation of the impedance circuit Z installed in the secondary coil Nₛ₂ is same as the impedance circuit Z shown in Fig. 1.

The dispersion of the impedance Z can be revised by installing a variable resistor in the oscillation circuit OSC and adjusting the oscillation frequency f.

Fig. 10 shows the embodiment when the present invention is applied to a half-bridge converter.

In this case, in the similar fashion to the push-pull type as shown in Fig. 8, an impedance circuit Z having a choke coil L₂ and condenser C₃ is connected to a secondary coil Nₛ₂. The required current can also be supplied to the alternating load without influencing the change of the input voltage and the load.

In the general stabilized electric power apparatus, the use of an output channel which does not feed back enlarges, for example a channel connected to the secondary coil NSₘ of Fig. 1, the output voltage variation when choke coil current intermittently flows. To improve this, countermeasures such as enlarging the inductance of the choke coil is required for the direct output current channel with large variation load.

However, the choke coil is necessary for all direct current output channels and this fact brings about another problem such as the overall size of the choke coil are enlarged resulting in the overall size of the power source being enlarged.

To solve this, use of a current-type converter is recommended. This converter is formed by moving a choke coil of each direct current output channel to the input side of the transistor, only one choke coil is required. For this reason, in power supply it has the advantage that the small space for choke coil can be used.

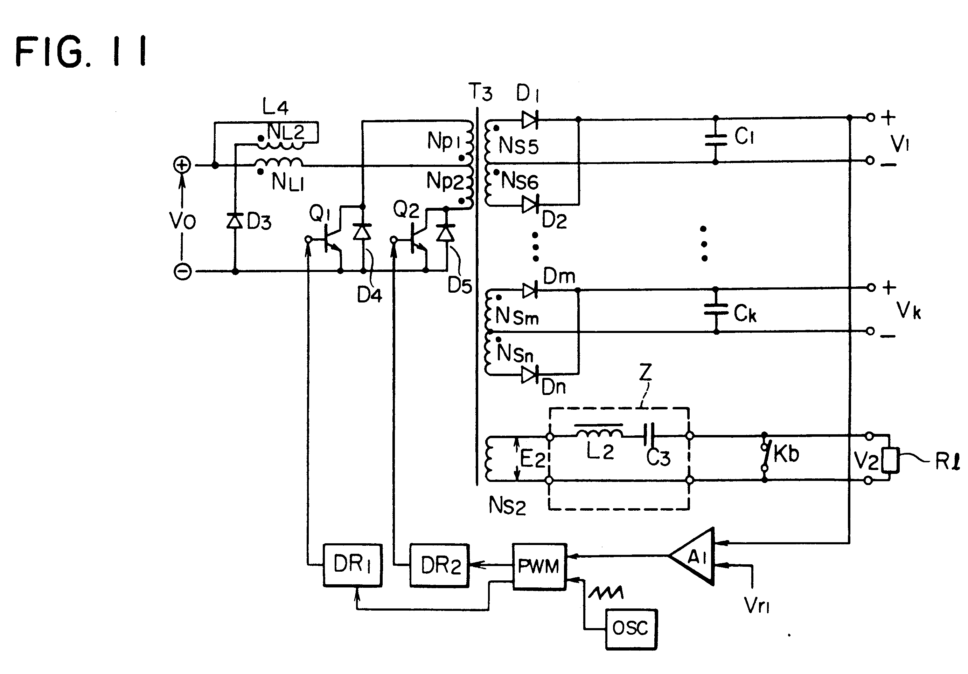

Another embodiment of the present invention based on the fact mentioned above will be described on the basis of Fig. 11.

Fig. 11 shows the embodiment when the present invention is applied to the current-type push-pull system.

In Fig. 11, Vₒ denotes the direct current power supply, L₄ denotes the choke coil for input, N_{L1} denotes the primary coil of a choke coil L₄, N_{L2} denotes the secondary coil of a choke coil L₄, D₃ denotes the diode connected with N_{L2} in series, Q₁ and Q₂ denote the switching transistors, D₄ denotes the diode provided between collector and emitter of the transistor Q₁, D₅ denotes the diode provided between collector and emitter of the transistor Q₂, T₃ denotes the inverter trans, Nₚ₁ and Nₚ₂ denote the primary coils of T₃, Nₛ₅ and Nₛ₆ denote the secondary coils for direct current output which are magnetically combined with the primary coil Nₚ₁ and Nₚ₂, Nₛ₂ denotes the secondary coil for alternating current output which is magnetically combined with the primary coils Nₚ₁ and Nₚ₂, D₁ and D₂ denote rectification diodes of the secondary coil Nₛ₅ and Nₛ₆, C₁ denotes the capacitor for smothing, L₂ denotes the choke coil of the secondary coil Nₛ₂ C₃ denotes the condenser for filter, K_{b} denotes the relay joint, Rℓ denotes the alternating current load.

Further, A₁ denotes the error amplification circuit which compares the direct current outputted by the secondary coils Nₛ₅ and Nₛ₆ with the standard voltage V_{R1} and outputs signals depending on the difference, OsC denotes the oscillation circuit generating triangular waves, PWM denotes the pulse modulation circuit to compare signals outputted by the error amplification circuit A₁ with triangular waves outputted by the oscillation circuit OSC and to output a pulse whose width changes, depending on the movement of cross-point, D_{R1} and D_{R2} denote the drive circuits which amplify the pulse and add to the base of transistors Q₁ and Q₂.

In this stabilized power supply apparatus of this embodiment, the direct voltage V₁ is stabilized by controlling the duty factor or transistors Q₁ and Q₂.

First, the motion of a choke coil L₄ will be explained.

The choke coil L₄ operates to control the current so that the input current can be constant. When either transistor is ON, the energy is accumulated in the choke coil L₄. The energy accumulated in the choke coil L₄ is returned to the input electric power Vₒ through an energy return coil N_{L2} when the transistors Q₁ and Q₂ are OFF. As mentioned above, the voltage loaded with the primary coil becomes constant, the voltage is induced with each secondary coil and the direct current output voltage is generated in proportion to its turn ratio.

These direct current voltages become substantially constant regardless of the load being large or small. Accordingly, the choke coil for input is installed to control all output current.

In this embodiment, the direct output voltage is stabilized by controlling the duty factor of the transistors Q₁ and Q₂.

Namely, the product of the voltage generated with the secondary coil Nₛ₅ and Nₛ₆ and ON-time of the transistors Q₁ and Q₂ is controlled to be constant without regard to the change in the input voltage and load. The required current can be supplied to the alternating load Rℓ with the adequate selection of the choke coil L₂ and the capacitor C₃ without influencing the change of input voltage and load.

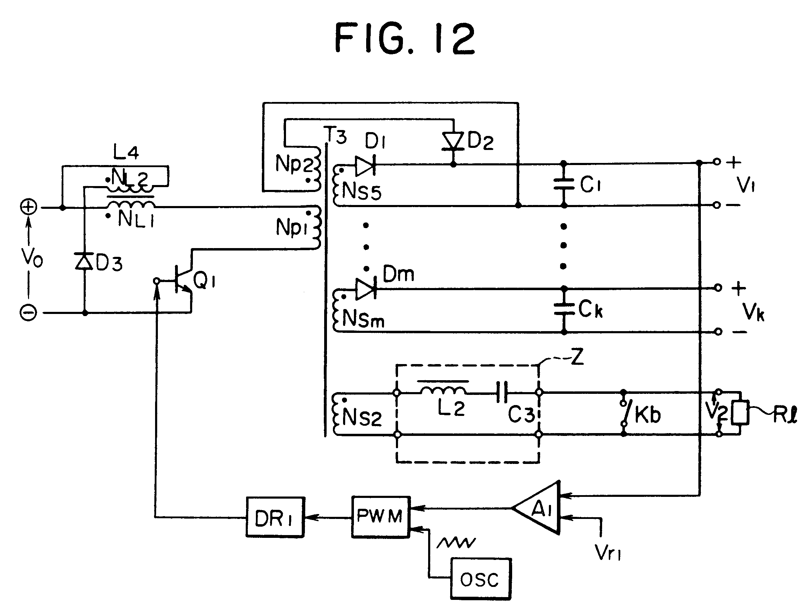

Fig. 12 shows the embodiment when the present invention is applied to the converter of current type 1-transistor system.

In the Fig. 12, L₄ is a choke coil disposed at the input side and others are similar to Fig. 11.

In this embodiment, when the transistor Q₁ is ON, the transformer T₃, excited by the coil Nₚ₁, are magnetized from zero to one side only on a B-H curve. This point is different from that in Fig. 11 using two switching transistors.

When the transistor Q₁ is ON, a half-wave part of the alternating current is induced through the secondary coil NS₂. When the transistor Q₁ is turned ON, no current runs through the direct current output coils NS₁ and NSₙ₁, and therefore, the remaining energy fed from the input side is stored or charged as energy for energizing the transformer.

When the transistor Q₁ is OFF, the exciting energy of the transformer T₃ is transferred to the load channel V₁ through a diode D₂ as the other half-wave of the alternating output current.

Thus, the alternating current voltage waveform is generated with the alternating current load Rℓ by the coil Nₛ₂.

The voltage waveform of the coil Nₛ₂ is expressed by the following formula, corresponding to the positive and negative half-waves;

${\text{(N}}_{\text{s2}} {\text{/N}}_{\text{s5}} {\text{)V₁, (N}}_{\text{s2}} {\text{/N}}_{\text{p2}} \text{)V₁}$

The alternating current voltage waveform of Nₛ₂ can be equalized by realizing the equation Nₛ₅ = Nₚ₂.

As described above, when the transistor Q₁ is OFF, the energy of the transformer T₃ supplied from the alternating current coil Nₛ₂ to the alternating current load RL is entirely the exciting energy.

For this reason, the transformer T₃ is required to have the exciting energy to maintain the power supply of a half-wave of the alternating current load by providing an air gap on the magnetic path.

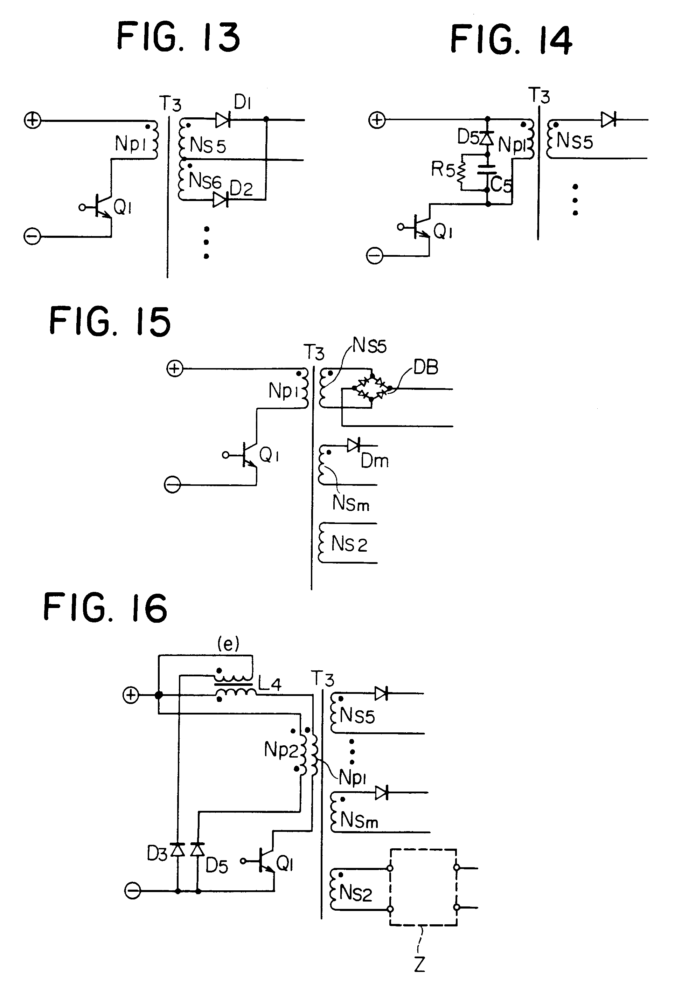

In Fig. 13, emission of the exciting energy of the T₃ is carried out by the coil Nₛ₆. In this case, the alternating current voltage waveform of the coil Nₛ₂ can be equalized by selecting the turns number as Nₛ₅ = Nₛ₆.

Fig. 14 shows the example that partial exciting energy of transformer T₃ can be absorbed by a voltage clamp circuit comprising a diode D₅, a condenser C₅ and a resistor R₅.

In this embodiment, the back-electromotive force of the coil Nₚ can be (Nₚ/Nₛ₅)V₁, due to adequate selection of each constant of the condenser C₅ and the resistor R₅. By this way, when the transistor Q₁ is ON, electromotive force of the coil becomes +V₁, and when the transistor Q₁ is OFF, electromotive force of the coil becomes -V₁.

Similarly, the alternating current voltage waveform whose positive and negative amplitudes are equal is generated in the coil Nₛ₂.

Fig. 15 shows another process for consuming the energy of the transformer T₃ through the coil Nₛ₅.

In this embodiment, the coil voltage can be led to the output side during either the ON or OFF period by installing a diode bridge DB with the coil Nₛ₅ in series.

The diode bridge can supply both positive and negative half-waves of the induction voltage of the coil Nₛ₅ are clamped with the output voltage V₁.

Consequently, the alternating current voltage whose positive and negative half-waves are equal is generated with the coil Nₛ₂.

Fig. 16 shows the system for returning the partial exciting energy from the transformer to the input.

In Fig. 16, Nₚ₂ is a return coil which returns exciting engergy to the input through a diode D₅.

The positive amplitude of the alternating current inducted with the coil Nₛ₂ is not equal to the negative one. However, with regard to the coil voltage, the product of the positive voltage-time is equal to that of the negative voltage-time and electric power can be loaded with the alternating current load Rℓ, while the energy of the positive and negative voltages are maintained to be equal.

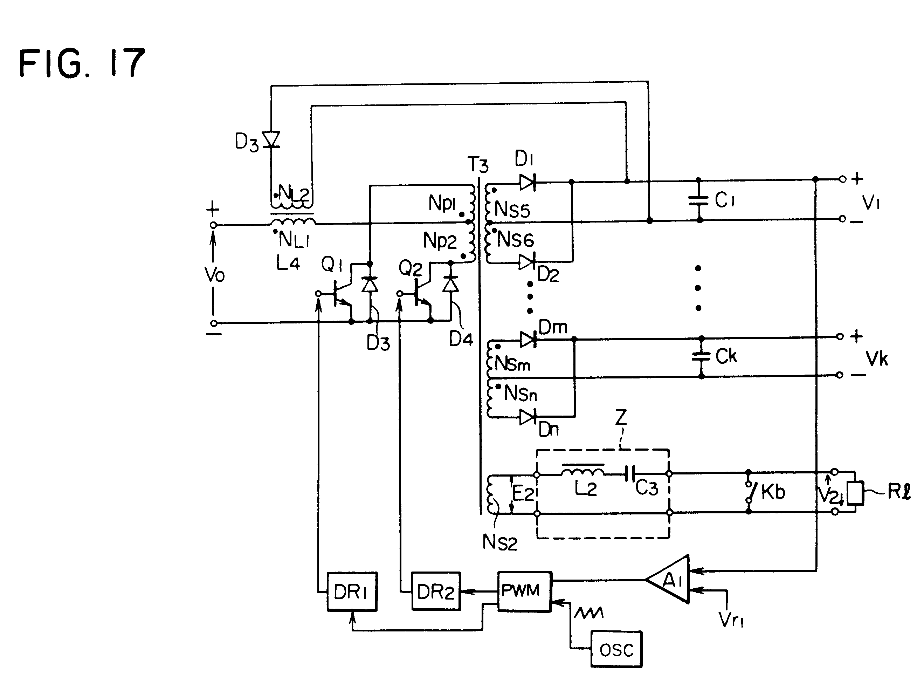

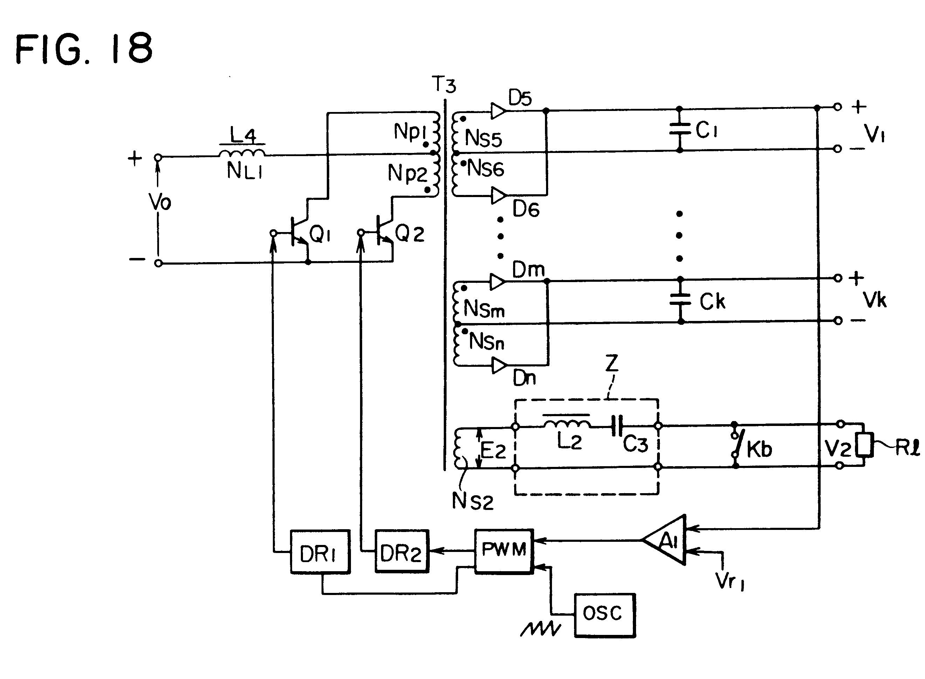

Now, another embodiment of the present invention will be described on the basis of Figs. 17 and 18.

These embodiments are showing when the present invention is applied to a current-type push-pull system.

In Fig. 17, the energy of the choke coil L₄ is supplied to the direct current output V₁ when transistors Q₁ and Q₂ are OFF.

On the other hand, in the embodiment of Fig. 18, a return coil is not provided in the choke coil L₄. In this case, the transistors Q₁ and Q₂ are necessarily driven so that its duty factor can be 50% ∼ 100%.

For this reason, there exists the period of time which the transistors Q₁ and Q₂ are ON simultaneously. During this period, the primary coil of the transformer T₃ is shortened by the two transistors without loading the input voltage. Vₒ is entirely loaded by the choke coil L₄.

When the transistors Q₁ and Q₂ are OFF, the energy of the choke coil L₄ is added to the input energy and converted to the second coil side after being loaded with the first coil.

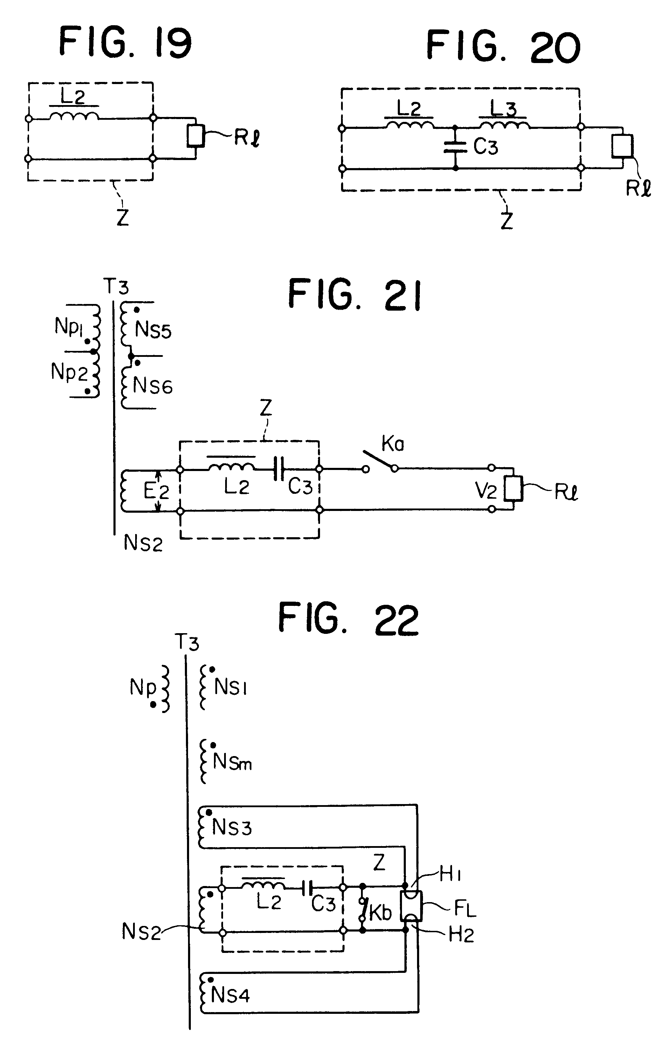

In each example mentioned above, the resonance circuit composed of the choke coil L₂ and the capacitor C₃ is used as a serial impedance circuit Z for the alternating current load. Instead of them, since impedance is required only its existence for the negative resistance property of alternating load, only one choke coil L₂ may be used as shown in Fig. 19.

The load current does not become a sine wave when only using choke coil L₂. And also it is possible to use the choke coil L₂ shown in Fig. 19 in the place of condenser for the negative resistance property of alternating load.

The L-letter connection of two choke coils L₁ and L₂ and the condenser C₃ may also be used as shown in Fig. 20.

In Fig. 20, the choke coil L₂ is operated as an impedance to control the current, The capacitor C₃ and the choke coil L₃ are forming a parallel resonance circuit.

The sine wave current can be supplied to the alternating current load Rℓ by setting the resonance frequency of the parallel resonance circuit to the switching frequency. And the choke coil can be used in place of condenser.

Therefore, in each embodiment mentioned above the relay joint for lighting the fluorescent lamp has been connected with the alternating current load Rℓ in parallel, it can also be connected in series as shown in Fig. 21.

In the embodiment of Fig. 21, a relay contact Kₐ is opened while the fluorescent lamp is not lit. When the fluorescent lamp is lit, the relay contact Kₐ is closed.

At this time, since the fluorescent lamp does not discharge anything, the current supplied to the fluorescent lamp is 0 and the voltage E₂ of the coil Nₛ₂ is entirely loaded to the fluorescent lamp.

Thus, the fluorescent lamp starts for discharge because its voltage is higher than that at the start of discharge. Then, the current is supplied to the fluorescent lamp and the voltage E₂ is reduced by the impedance Z, therefore, the required voltage for lighting can be loaded with the fluorescent lamp when the values of the choke coil L₂ and the capacitor C₃ are determined in advance.

Subsequently, it will be described the process for connecting the fluorescent lamp FL in the present invention.

In Fig. 22, the required heater voltage for a heater of a fluorescent lamp FL is supplied from the coils of two heaters which are Nₛ₃ and Nₛ₄ of a transformer.

By this system, the heater coil is required to have only one or two turns, and voltage becomes several volts per turn. However, the setting of the coil at a unit of an integer may change the generating voltage substantially.

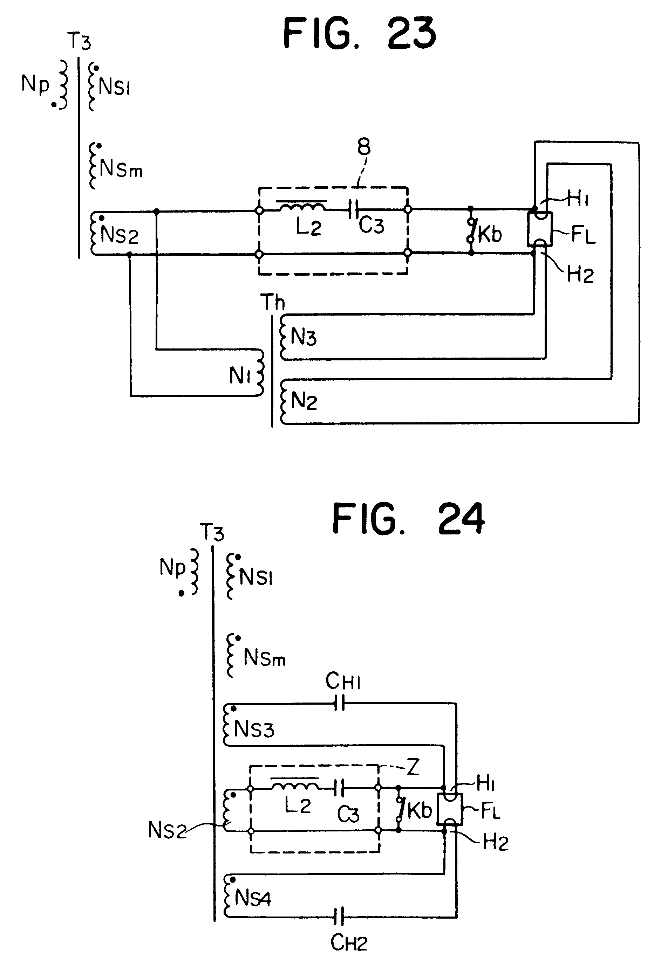

In Fig. 23, this problem is eliminated by installing an transformer Th for the hearter. This method enhances the degree of freedom of heater coil design and can make a fine adjustment of the heater voltage.

In Fig. 24, condensers C_{H1} and C_{C2} are connected with heaters in series as impedances so that the heater voltage can be set to the required value.

As described above, in the stabilized power apparatus of the present invention, due to the provision of the impedance circuit connected to the secondary coils of the transformer for creating alternating power, variations in voltage applied to an alternating current load can be absorbed by the impedance of the impedance circuit even through the above-mentioned alternating current load has a negative resistance characteristic. Further, since the impedance circuit connected to the secondary circuit for alternating current power is used as a resonance circuit, and the switching frequency of the switching transistor is shifted from the resonance frequency of the resonance circuit so that the the resonance circuit has a certain impedance, the output alternating current can be stabilized, and can have a substantially sinusoidal waveform. Further, since the aforementioned impedance circuit is composed of an resonance circuit and a coil or a capacitor, and the switching frequency of the switching transistor is adjusted to the resonance frequency of the resonance circuit, alternating current output can be made to be stabilized sinusoidal electrical current.

## Claims

1. A stabilized power supply apparatus comprising:
a switching circuit (Q1) for converting a direct current power into pulses by switching,
a transformer having a primary winding (Np) to be applied with the pulses generated by the switching circuit (Q1), at least one first secondary winding (Ns1) and a second secondary winding (Ns2),
a rectifying/smoothing circuit (D1, C1) connected to the first secondary winding (Ns1),
an alternating current (AC) load (Rₗ) connected to the second secondary winding (Ns2),
an oscillator (OSC),
a comparison circuit (A1) for comparing the output of the rectifying/smoothing circuit (D1, C1) with a reference value (VR1),
a pulse width modulator (PWM) for modulating the pulse width of the output of the oscillator (OSC) in accordance with the output of the comparison circuit (A1), and
a drive circuit (DR) for controlling the switching circuit (Q1) in accordance with the output of the pulse width modulator, characterized in that
the alternating current (AC) load (Rₗ) is connected to the second secondary winding (Ns2) via impedance mans (Z), the AC load having negative resistance property, and in that the oscillator (OSC) oscillates at a constant frequency.

2. A stabilized power supply apparatus comprising:
a switching circuit (Q1) for converting a direct current power into pulses by switching,
a transformer having a primary winding (Nₚ) to be applied with the pulses generated by the switching circuit (Q1), at least one first secondary winding (Ns1) a second secondary winding (Ns2) and a third secondary winding (NF),
a rectifying/smoothing circuit (D1, C1) connected to the first secondary winding (Ns1),
an alternating current (AC) load (R₁) connected to the second secondary winding (Ns2),
a second rectifying/smoothing circuit (Ds, Cs) connected to the third secondary winding (NF),
an oscillator (OSC),
a comparison circuit (A1) for comparing a direct voltage derived from an AC voltage across the third secondary winding (NF) of the transformer with a reference value (VR1),
a pulse width modulator (PWM) for modulating the pulse width of the output of the oscillator (OSC) in accordance with the output of the comparison circuit (A1), and
a drive circuit (DR) for controlling the switching circuit (Q1) in accordance with the output of the pulse width modulator, characterized in that the alternating current (AC) load (R₁) is connected to the second secondary winding (Ns2) via impedance means (Z), the AC load having negative resistance property, in that the oscillator (OSC) oscillates at a constant frequency and in that the comparison circuit (A1) compares the output voltage of the second rectifying/smoothing circuit (Ds, Cs) with the reference value (VR1).

3. A stabilized power supply apparatus according to claim 1, characterized in that the stabilized power supply apparatus is of flyback type.

4. A stabilized power supply apparatus according to claim 1, characterized in that the stabilized power supply apparatus is of forward type.

5. A stabilized power supply apparatus according to claim 4, characterized in that the switching circuit has a snubber circuit (SN).

6. A stabilized power supply apparatus according to claim 5, characterized by further comprising a reset coil (Np3) arranged at a primary side of the transformer.

7. A stabilized power supply apparatus according to claim 1, characterized in that the switching circuit comprises two transistors (Q1, Q2) performing push-pull operation and the drive circuit includes drive circuits (DR1, DR2) for respectively controlling the two transistors (Q1, Q2).

8. A stabilized power supply apparatus according to claim 1, characterized in that the switching circuit comprises two transistors (Q1, Q2) connected in a half-bridge type, and the drive circuit includes drive circuits (DR1, DR2) for respectively controlling the two transistors (Q1, Q2).

9. A stabilized power supply apparatus according to claim 7, characterized in that the switching circuit is of current-push-pull type and the stabilized electric power apparatus further comprises a choke coil (L4) arranged at a primary side of the transformer.

10. A stabilized power supply apparatus according to claim 3, further comprising a choke coil (L4) arranged at a primary side of the transformer.

11. A stabilized power supply apparatus according to claim 10, further comprising a transformer primary winding (Np2) for transferring excitation energy to the rectifying/smoothing circuit.

12. A stabilized power supply apparatus according to claim 7, characterized in that the switching circuit is current-push-pull type and the stabilized electric power apparatus further comprises a transformer primary winding (Np2) connected to the rectifying/smoothing circuit via the choke coil (L4) which forms part of a transformer (NL1, NL2).

13. A stabilizer power supply apparatus according to claim 1 or 2, characterized in that the impedance means (Z) comprises a choke coil (L2) and a capacitor (C3), the choke coil and the capacitor being connected to each other in series.

14. A stabilized power supply apparatus according to claim 1 or 2, characterized in that the impedance means (Z) comprises a choke coil (L2).

15. A stabilized power supply apparatus according to claim 1 or 2, characterized in that the impedance means (Z) comprises first and second choke coils (L2, L3), each of the first and second choke coils being connected to the second coil (Ns2) in series, and a capacitor connected to the second coil (Ns2) in parallel.

16. A stabilized power supply apparatus according to claim 1 or 2, characterized in that the AC load (R₁) is a fluorescent lamp.

17. A stabilized power supply apparatus according to claim 1 or claim 2, characterized in that a primary partial return coil (Np2) is provided for returning part of the transformer excitation energy to an input via a diode (D5).

## Patentansprüche

1. Stabilisierte Stromversorgungsvorrichtung mit:
einem Schaltkreis (Q₁) zur Umwandlung einer Gleichstromleistung in Impulse mittels Schaltens,
einem Transformator, der eine Primärwicklung (Nₚ) aufweist, an welche die Impulse angelegt werden sollen, die von dem Schaltkreis (Q₁) erzeugt werden, zumindest eine erste Sekundärwicklung (Nₛ₁) und eine zweite Sekundärwicklung (Nₛ₂),
einer Gleichrichter/Glättungsschaltung (D₁, C₁), die an die erste Sekundärwicklung (Nₛ₁) angeschlossen ist,
einer Wechselstrom-(AC)-Last (Rₗ), die an die zweite Sekundärwicklung (Nₛ₂) angeschlossen ist,
einem Oszillator (OSC),
einer Vergleichsschaltung (A₁) zum Vergleichen des Ausgangssignals der Gleichrichter/Glättungsschaltung (D₁, C₁) mit einem Referenzwert (V_{R1}),
einem Impulsbreitenmodulator (PWM) zum Modulieren der Impulsbreite des Ausgangssignals des Oszillators (OSC) entsprechend dem Ausgangssignal der Vergleichsschaltung (A₁), und
einer Treiberschaltung (DR) zum Steuern des Schaltkreises (Q₁) entsprechend dem Ausgangssignal des Impulsbreitenmodulators,
dadurch **gekennzeichnet,**
daß die Wechselstrom-(AG)-Last (Rₗ) an die zweite Sekundärwicklung (Nₛ₂) über eine Impedanzeinrichtung (Z) angeschlossen ist, daß die AC-Last negative Widerstandseigenschaften aufweist, und daß der Oszillator (OSC) bei konstanter Frequenz schwingt.

2. Stabilisierte Stromversorgungsvorrichtung, mit
einem Schaltkreis (Q₁) zur Umwandlung einer Gleichstromleistung in Impulse mittels Schalten,
einem Transformator, der eine Primärwicklung (Nₚ) aufweist, an welche die Impulse angelegt werden sollen, die durch den Schaltkreis (Q₁) erzeugt werden, zumindest eine erste Sekundärwicklung (Nₛ₁), eine zweite Sekundärwicklung (Nₛ₂), und eine dritte Sekundärwicklung (NF),
einer Gleichrichter/Glättungsschaltung (D₁, C₁), die an die erste Sekundärwicklung (Nₛ₁) angeschlossen ist,
einer Wechselstrom-(AC)-Last (Rₗ), die an die zweite Sekundärwicklung (Nₛ₂) angeschlossen ist,
einer zweiten Gleichrichter/Glättungsschaltung (Dₛ, Cₛ), die an die dritte Sekundärwicklung (NF) angeschlossen ist,
einem Oszillator (OSC),
einer Vergleichsschaltung (A₁) zum Vergleichen einer Gleichspannung, die von einer Wechselspannung über die dritte Sekundärwicklung (NF) des Transformators abgeleitet ist, mit einem Referenzwert (V_{R1}),
einem Impulsbreitenmodulator (PWM) zum Modulieren der Impulsbreite des Ausgangssignals des Oszillators (OSC) entsprechend dem Ausgangssignal der Vergleichsschaltung (A₁), und
einer Treiberschaltung (DR) zum Steuern des Schaltkreises (Q₁) entsprechend dem Ausgangssignal des Impulsbreitenmodulators,
dadurch **gekennzeichnet,** daß die Wechselstrom-(AC)-Last (Rₗ) an die zweite Sekundärwicklung (Nₛ₂) über eine Impedanzeinrichtung (Z) angeschlossen ist, daß die AC-Last negative Widerstandseigenschaften aufweist, daß der Oszillator (OSC) mit einer konstanten Frequenz schwingt, und daß die Vergleichsschaltung (A₁) die Ausgangsspannung der zweiten
Gleichrichter/Glättungsschaltung (Dₛ, Cₛ) mit dem Referenzwert (V_{R1}) vergleicht.

3. Stabilisierte Stromversorgungsvorrichtung nach Anspruch 1,
dadurch **gekennzeichnet,** daß die stabilisierte Stromversorgungsvorrichtung vom Rücklauftyp ist.

4. Stabilisierte Stromversorgungsvorrichtung nach Anspruch 1,
dadurch **gekennzeichnet,** daß die stabilisierte Stromversorgungsvorrichtung vom Vorwärtstyp ist.

5. Stabilisierte Stromversorgungsvorrichtung nach Anspruch 4,
dadurch **gekennzeichnet,** daß der Schaltkreis eine Dämpferschaltung (SN) aufweist.

6. Stabilisierte Stromversorgungsvorrichtung nach Anspruch 5,
dadurch **gekennzeichnet,** daß weiterhin eine Rücksetzspule (Nₚ₃) vorgesehen ist, die an einer Primärseite des Transformators angeordnet ist.

7. Stabilisierte Stromversorgungsvorrichtung nach Anspruch 1,
dadurch **gekennzeichnet,** daß der Schaltkreis zwei Transistoren (Q₁, Q₂) aufweist, die einen Gegentaktbetrieb durchführen, und daß die Treiberschaltung Treiberschaltungen (D_{R1}, D_{R2}) aufweist, um jeden der zwei Transistoren (Q₁, Q₂) jeweils zu steuern.

8. Stabilisierte Stromversorgungsvorrichtung nach Anspruch 1,
dadurch **gekennzeichnet,** daß der Schaltkreis zwei Transistoren (Q₁, Q₂) aufweist, die in einer Halbbrückenschaltung angeschlossen sind, und daß die Treiberschaltung Treiberschaltungen (D_{R1}, D_{R2}) umfaßt, um jeden der beiden Transistoren (Q₁, Q₂) jeweils zu steuern.

9. Stabilisierte Stromversorgungsvorrichtung nach Anspruch 7,
dadurch **gekennzeichnet,** daß der Schaltkreis vom Stromgegentakttyp ist, und daß die stabilisierte elektrische Stromversorgungsvorrichtung weiterhin eine Drosselspule (L₄) aufweist, die an einer Primärseite des Transformators angeordnet ist.

10. Stabilisierte Stromversorgungsvorrichtung nach Anspruch 3,
welche weiterhin eine Drosselspule (L₄) aufweist, die an einer Primärseite des Transformators angeordnet ist.

11. Stabilisierte Stromversorgungsvorrichtung nach Anspruch 10,
die weiterhin eine Transformator-Primärwicklung (Nₚ₂) aufweist, um Anregungsenergie an die Gleichrichter/Glättungsschaitung zu übertragen.

12. Stabilisierte Stromversorgungsvorrichtung nach Anspruch 7,
dadurch **gekennzeichnet,** daß der Schaltkreis vom Stromgegentakttyp ist, und daß die stabilisierte elektrische Stromversorgungsvorrichtung weiterhin eine Transformator-Primärwicklung (Nₚ₂) aufweist, die an die Gleichrichter/Glättungsschaltung über die Drosselspule (L₄) angeschlossen ist, welche einen Teil eines Transformators (N_{L1}, N_{L2}) bildet.

13. Stabilisierte Stromversorgungsvorrichtung nach Anspruch 1 oder 2,
dadurch **gekennzeichnet,** daß die Impedanzeinrichtung (Z) eine Drosselspule (L₂) und einen Kondensator (C₃) aufweist, wobei die Drosselspule und der Kondensator miteinander in Reihe geschaltet sind.

14. Stabilisierte Stromversorgungsvorrichtung nach Anspruch 1 oder 2,
dadurch **gekennzeichnet,** daß die Impedanzeinrichtung (Z) eine Drosselspule (L₂) umfaßt.

15. Stabilisierte Stromversorgungsvorrichtung nach Anspruch 1 oder 2,
dadurch **gekennzeichnet,** daß die Impedanzeinrichtung (Z) eine erste und eine zweite Drosselspule (L₂, L₃) aufweist, von denen jede in Reihe mit der zweiten Spule (Nₛ₂) verbunden ist, sowie einen parallel zur zweiten Spule (Nₛ₂) geschalteten Kondensator.

16. Stabilisierte Stromversorgungsvorrichtung nach Anspruch 1 oder 2,
dadurch **gekennzeichnet,** daß die AC-Last (Rₗ) eine Fluoreszenzlampe ist.

17. Stabilisierte Stromversorgungsvorrichtung nach Anspruch 1 oder Anspruch 2,
dadurch **gekennzeichnet,** daß eine primäre Partialrückführspule (Nₚ₂) vorgesehen ist, um einen Teil der Transformatoranregungsenergie zu einem Eingang über eine Diode (D₅) zurückzuführen.

## Revendications

1. Dispositif d'alimentation stabilisée comprenant :
un circuit de commutation (Q1) pour convertir une alimentation continue en impulsions, par commutation ;
un transformateur comportant un enroulement primaire (Np) destiné à se voir appliquer les impulsions générées par le circuit de commutation (Q1), au moins un premier enroulement secondaire (Ns1) et un second enroulement secondaire (Ns2) ;
un circuit de redressage/lissage (D1, C1) connecté au premier enroulement secondaire (Ns1) ;
une charge (R1) alimentée en courant alternatif (charge AC) connectée au second enroulement secondaire (Ns2) ;
un oscillateur (OSC) ;
un circuit de comparaison (A1) pour comparer la sortie du circuit de redressage/lissage (D1, C1) à une valeur de référence (VR1) ;
un modulateur d'impulsions en largeur (PWM) pour moduler la largeur d'impulsion de la sortie de l'oscillateur (OSC) en relation avec la sortie du circuit de comparaison (A1) ; et
un circuit de commande (DR) pour commander le circuit de commutation (Q1) en relation avec la sortie du modulateur d'impulsions en largeur,
caractérisé en ce que :
la charge (R1) alimentée en courant alternatif (charge AC) est connectée au second enroulement secondaire (Ns2) via un moyen d'impédance (Z), la charge (AC) présentant une propriété de résistance négative, et en ce que l'oscillateur (OSC) oscille à une fréquence constante.

2. Dispositif d'alimentation stabilisée comprenant :
un circuit de commutation (Q1) pour convertir une alimentation continue en impulsions, par commutation ;
un transformateur comportant un enroulement primaire (Np) destiné à se voir appliquer les impulsions générées par le circuit de commutation (Q1), au moins un premier enroulement secondaire (Ns1), un second enroulement secondaire (Ns2) et un troisième enroulement secondaire (NF) ;
un circuit de redressage/lissage (D1, C1) connecté au premier enroulement secondaire (Ns1) ;
une charge (R1) alimentée en courant alternatif (charge AC) connectée au second enroulement secondaire (Ns2) ;
un second circuit de redressage/lissage (Ds, Cs) connecté au troisième enroulement secondaire (NF) ;
un oscillateur (OSC) ;
un circuit de comparaison (A1) pour comparer une tension continue dérivée d'une tension alternative aux bornes du troisième enroulement secondaire (NF) du transformateur à une valeur de référence (VR1) ;
un modulateur d'impulsions en largeur (PWM) pour moduler la largeur d'impulsion de la sortie de l'oscillateur (OSC) en relation avec la sortie du circuit de comparaison (A1) ; et
un circuit de commande (DR) pour commander le circuit de commutation (Q1) en relation avec la sortie du modulateur d'impulsions en largeur,
caractérisé en ce que :
la charge (R1) alimentée en courant alternatif (charge AC) est connectée au second enroulement secondaire (Ns2) via un moyen d'impédance (Z), la charge (AC) présentant une propriété de résistance négative, en ce que l'oscillateur (OSC) oscille à une fréquence constante et en ce que le circuit de comparaison (A1) compare la tension de sortie du second circuit de redressage/lissage (Ds, Cs) à la valeur de référence (VR1).

3. Dispositif d'alimentation stabilisée selon la revendication 1, caractérisé en ce que le dispositif d'alimentation stabilisée est du type retour.

4. Dispositif d'alimentation stabilisée selon la revendication 1, caractérisé en ce que le dispositif d'alimentation stabilisée est du type direct.

5. Dispositif d'alimentation stabilisée selon la revendication 4, caractérisé en ce que le circuit de commutation comporte un circuit amortisseur (SN).

6. Dispositif d'alimentation stabilisée selon la revendication 5, caractérisé en ce qu'il comprend en outre une bobine de remise à l'état initial (Np3) agencée au niveau d'un côté primaire du transformateur.

7. Dispositif d'alimentation stabilisée selon la revendication 1, caractérisé en ce que le circuit de commutation comprend deux transistors (Q1, Q2) qui réalisent un fonctionnement push-pull et le circuit de commande inclut des circuits de commande (DR1, DR2) pour commander respectivement les deux transistors (Q1, Q2).

8. Dispositif d'alimentation stabilisée selon la revendication 1, caractérisé en ce que le circuit de commutation comprend deux transistors (Q1, Q2) connectés selon un type demi-pont et le circuit de commande inclut des circuits de commande (DR1, DR2) pour commander respectivement les deux transistors (Q1, Q2).

9. Dispositif d'alimentation stabilisée selon la revendication 7, caractérisé en ce que le circuit de commutation est du type push-pull en courant et le dispositif d'alimentation stabilisée comprend en outre une bobine d'arrêt (L4) agencée au niveau d'un côté primaire du transformateur.

10. Dispositif d'alimentation stabilisée selon la revendication 3, comprenant en outre une bobine d'arrêt (L4) agencée au niveau d'un côté primaire du transformateur.

11. Dispositif d'alimentation stabilisée selon la revendication 10, comprenant en outre un enroulement primaire de transformateur (Np2) pour transférer une énergie d'excitation au circuit de redressage/lissage.

12. Dispositif d'alimentation stabilisée selon la revendication 7, caractérisé en ce que le circuit de commutation est du type push-pull en courant et le dispositif d'alimentation électrique stabilisée comprend en outre un enroulement primaire de transformateur (Np2) connecté au circuit de redressage/lissage via la bobine d'arrêt (L4) qui forme une partie d'un transformateur (NL1, NL2).

13. Dispositif d'alimentation stabilisée selon la revendication 1 ou 2, caractérisé en ce que le moyen d'impédance (Z) comprend une bobine d'arrêt (L2) et une capacité (C3), la bobine d'arrêt et la capacité étant connectées l'une à l'autre en série.

14. Dispositif d'alimentation stabilisée selon la revendication 1 ou 2, caractérisé en ce que le moyen d'impédance (Z) comprend une bobine d'arrêt (L2).

15. Dispositif d'alimentation stabilisée selon la revendication 1 ou 2, caractérisé en ce que le moyen d'impédance (Z) comprend des première et seconde bobines d'arrêt (L2, L3), chacune des première et seconde bobines d'arrêt étant connectée à la seconde bobine (Ns2) en série, et une capacité connectée à la seconde bobine (Ns2) en parallèle.

16. Dispositif d'alimentation stabilisée selon la revendication 1 ou 2, caractérisé en ce que la charge AC (R1) est une lampe fluorescente.

17. Dispositif d'alimentation stabilisée selon la revendication 1 ou 2, caractérisé en ce qu'une bobine de retour partiel primaire (Np2) est prévue pour retourner une partie de l'énergie d'excitation de transformateur à une entrée via une diode (D5).
